Europäisches Patentamt

European Patent Office

Office européen des brevets

(19)

(11) Numéro de publication: **0 050 179 B1**

(12) **FASCICULE DE BREVET EUROPEEN**

(45) Date de publication de fascicule du brevet: **27.05.92** (51) Int. Cl.⁵: **B23B 7/06**

(21) Numéro de dépôt: **80810318.8**

(22) Date de dépôt: **20.10.80**

(54) **Tour automatique à commande numérique.**

(43) Date de publication de la demande:
**28.04.82 Bulletin 82/17**

(45) Mention de la délivrance du brevet:
**27.05.92 Bulletin 92/22**

(84) Etats contractants désignés:
**CH CH DE FR GB IT**

(56) Documents cités:
**CH-A- 608 399**
**DE-A- 2 234 389**
**DE-A- 2 531 430**
**FR-A- 2 275 267**
**US-A- 3 296 897**

**WERSTATT UND BETRIEB, Vol. 109, N 12,
Décembre 1976 Munich, W. SCHWEITZER
"CNC-Langdrehautomat" pages 695 à 697**

**WERKSTATT UND BETREIB, Vol. 112, N 1,
Janvier 1979 Munich,
"CNC-Langdrehautomat" pages 24**

(73) Titulaire: **Habegger, Harold
Sous Graitery 10
CH-2738 Court(CH)**

(72) Inventeur: **Habegger, Harold
Sous Graitery 10
CH-2738 Court(CH)**

(74) Mandataire: **Micheli, Michel-Pierre et al
MICHELI & CIE Rue de Genève 122 Case
postale 61
CH-1226 Genève-Thônex(CH)**

## Description

La prèsente demande concerne des tours automatiques à commande numerique selon le préambule de la revendication 1; voir par exemple FR-A-2 275 267.

Dans le secteur de la machine-outil, on rencontre de plus en plus des commandes numériques sur le marché, car, à l'aide d'un ordinateur programmé selon les fonctions d'une telle machine, il est possible de mettre en route sans délai la production d'une pièce déterminée. A cette fin, il suffit, en effet, d'introduire dans l'ordinateur les données relatives à la séquence des opérations d'usinage à effectuer, ainsi que les cotes de la pièce à produire, ce qui ne prend guère plus de quelques minutes.

La commande numérique a ainsi l'avantage de supprimer les opérations de mise en train, comprenant le traçage de diagrammes des cames, le taillage et finalement le montage de celles-ci, qui sont particulièrement fastidieuses dans le cas des tours du type "suisse", dits à poupée mobile, du fait qu'en plus de la commande des outils, il faut encore commander les déplacements simultanés de la pièce le long de son axe pendant l'usinage de cette dernière.

Ces derniers tours, capables d'effectuer des usinages de haute précision, qui n'étaient utilisés que pour le production de grandes séries de pièces identiques, justifiant et les temps de préparation des cames et ceux d'immobilisation de la machine pendant le montage des cames et la mise en train de toutes les opérations, peuvent, grâce à la commande numérique, être utilisés d'une façon économiquement rentable, même pour ne fabriquer qu'une seule pièce, pour un prototype d'essai, par exemple.

En outre, la commande numérique est plus souple que celle par cames, en ce sens qu'elle permet de corriger en quelques secondes une erreur de programmation des opérations d'usinage ou de modifier dans les mêmes conditions une ou plusieurs cotes de la pièce à produire ou la course d'un ou plusieurs organes de la machine.

Pour profiter des nombreux avantages de la commande numérique, les fabricants des tours automatiques du type "suisse" se sont efforcés de commander les différents organes de leurs machines en se bornant à substituer aux cames utilisées jusqu'alors des moteurs pas à pas ou des pistons hydrauliques commandés à partir du générateur d'impulsions électriques de la commande numérique.

La conservation de l'agencement traditionnel des organes fondamentaux de ces tours a cependant conduit à des réalisations hétéroclites, dans lesquelles la cinématique assurant la transmission aux organes fondamentaux du tour des mouvements nécessaires à partir des organes commandés par impulsions électriques n'est pas réalisée en profitant de la nature de ces derniers organes et des possibilités qu'offre leur mode de commande.

Ainsi, dans les tours automatiques connus, qui correspondent au préambule de la revendication 1, les outils en question, qui sont généralement des burins destinés à façonner la surface extérieure des pièces par tournage et, dans le cas où les pièces sont fabriquées à partir d'une barre de matière, à les tronçonner de cette barre, sont constitués, comme dans les tours à commande par cames, par de longs barreaux prismatiques, fixés sur des porte-outils montés sur des coulisses, elles-mêmes fixées par un tourillon à une plaque verticale solidaire du bâti du tour. Outre le fait que cet agencement des dits outils du tour est encombrant, il comporte de nombreux porte-à-faux, qui ne sont manifestement pas de nature à garantir une bien grande stabilité des arêtes de coupe de ces outils par rapport au bâti du tour et, par voie de conséquence, par rapport à la pièce en travail.

L'invention vise à créer un tour automatique selon le préambule de la revendication 1, dans lequel la stabilité des outils radiaux soit mieux garantie que dans les tours connus, tout en simplifiant la construction, en facilitant les réglages et en réduisant l'encombrement.

La solution définie par la caractéristique de la revendication 1 garantit la stabilité des outils du fait qu'un coulisseau cylindrique, guidé par un alésage d'un bâti fixe, ne présente aucun porte-à-faux et offre, en outre, une surface suffisante pour lui fixer un outil relativement court d'une façon très rigide. Cette solution est simple du fait que les coulisseaux porte-outils sont montés dans le support fixe lui-même, et non sur des coulisses fixées à ce support par ces tourillons. Pour régler la position des outils, il n'est plus nécessaire de réajuster la position des coulisses guidant les porte-outils sur le support fixe ni d'actionner des vis micrométriques; cette correction s'effectue numériquement, en corrigeant simplement des données fournies à l'ordinateur. Enfin, l'encombrement est réduit vu que la face avant du support des outils est vierge de tout organe et que la liaison prévue des moteurs pas à pas aux coulisseaux correspondants supprime tiges de poussée, culbuteurs et ressorts de rappel.

La liaison des moteurs pas à pas aux coulisseaux est prévue de préférence en raison de sa simplicité autant que de sa fiabilité.

Les formes spéciales d'exécution définies par les revendications 2 et 3 ont l'avantage de permettre un réglage fin et stable de la position de l'arête de coupe de l'outil par rapport à l'axe de la pièce en travail.

Les particularités définies par la revendication 4 assurent une fixation tout spécialement rigide et précise de l'outil à son coulisseau.

Les organes de repérage définis par la revendication 5 assurent l'orientation de l'outil par rapport au coulisseau, partant à la pièce, tout en facilitant la mise en place de cet outil sur son coulisseau.

La commande numérique des déplacements axiaux de la broche porte-pièce remplace l'ajustage traditionnel de la position des outils le long de l'axe de la pièce, en ce sens qu'après l'affûtage d'un outil, il suffit de corriger la cote fournie à l'ordinateur, qui détermine la position axiale de la pièce par rapport à cet outil.

Enfin, les moyens traditionnels assurant la précision du travail dans les tours à poupée mobile à commande mécanique par cames sont aussi applicables dans le tour selon l'invention.

Une forme d'exécution à deux variantes du tour selon l'invention sont représentées schématiquement et à titre d'exemple au dessin dans lequel :

la Fig. 1 est une vue en élévation de cette forme d'exécution dans la première variante, certaines parties étant vues en coupe;

la Fig. 2 est une vue en bout à plus grande échelle d'une partie de cette forme d'exécution dans la seconde variante, une partie étant vue en coupe;

la Fig. 3 montre, à échelle encore plus grande, une partie de la Fig. 1;

les Fig. 4 et 5 sont des coupes transversales d'une partie de la Fig. 3, dans deux positions de réglage différentes;

la Fig. 6 est une vue partielle en élévation, à l'échelle de la Fig. 3 d'un organe de la Fig. 2;

la Fig. 7 est une vue en élévation, à l'échelle de la Fig. 6, d'un autre organe de la Fig. 2;

la Fig. 8 est une vue en plan de l'organe de la Fig. 7;

la Fig. 9 représente, partiellement en coupe, les organes des Fig. 6 et 7, vus depuis la droite dans ces Fig. 6 et 7 et se trouvant en position assemblée;

la Fig. 10 est une vue de dessous de la Fig. 9, et

la Fig. 11 est une coupe partielle de la Fig. 9 selon un plan perpendiculaire à celui de cette figure.

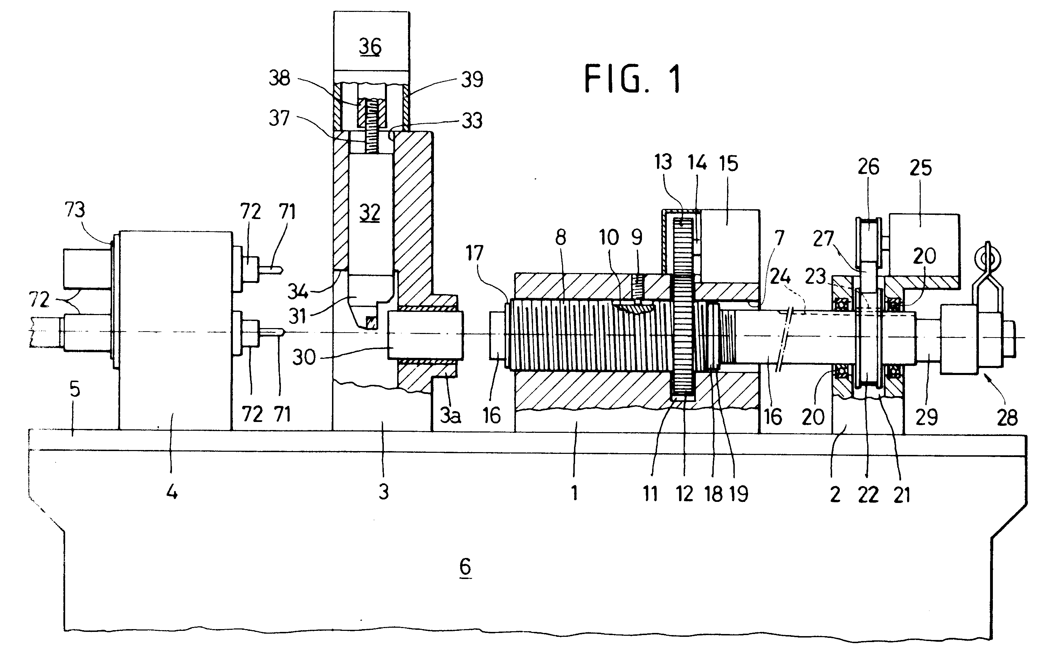

Le tour automatique représenté à la Fig. 1 comprend une poupée 1, une lunette 2, un support 3 et le bâti 4 d'un appareil en bout, qui, tous quatre, sont fixés chacun pour soi à une table 5, solidaire du bâti 6 du tour. A cet effet, la table 5 présente, le long de chacun de ses bords longitudinaux, une série de trous (non représentés) et les éléments 1 à 4 des oreilles (non représentées) correspondant aux trous de la table 5, afin de permettre la fixation de ces éléments à la table 5 au moyen de vis (non représentées). Ces moyens de fixation permettent non seulement de disposer les éléments 1 à 4 sur la table 5 aux distances voulues les uns des autres, mais aussi de les fixer à cette table dans l'ordre inverse par rapport à la Fig. 1, à la convenance du desservant du tour et selon la place à disposition dans l'atelier, autour du bâti 6.

La poupée 1 présente un alésage traversant 7, dans lequel est monté un manchon fileté 8. Ce manchon 8 peut coulisser librement dans l'alésage 7, mais un prisonnier 9, plongeant dans une rainure longitudinale 10 du manchon 8, empêche ce dernier de tourner dans l'alésage 7 de la poupée 1. Le filetage du manchon 8 sera constitué de préférence par une creusure hélicoïdale, de section semicirculaire et d'un pas supérieur au diamètre de cette creusure, afin de laisser subsister une portion de surface cylindrique entre deux tours successifs de la dite creusure et d'assurer ainsi un ajustage précis du manchon 8 dans l'alésage 7.

La poupée 1 présente aussi une creusure transversale 11 pour une roue dentée 12, qui est en prise avec le filetage du manchon 8 et qui peut tourner librement dans la creusure 11, mais avec un jeu axial aussi réduit que possible. L'engagement de la roue 12 sur le filetage du manchon 8 peut être réalisé par un filetage interne de la roue 12 correspondant à celui du manchon 8. De préférence, cet engagement sera cependant assuré par un train de billes montées dans un passage axial de la roue 12, d'une façon bien connue des hommes du métier. Vu le faible frottement d'un tel train de billes dans une rainure de section semicirculaire du manchon 8, la roue 12 produira toujours un déplacement axial du manchon 8 qui sera proportionnel à ses angles de rotation. Lors d'une inversion du sens de rotation de la roue 12, il n'y aura donc pas d'angle "mort" de rotation de la roue avant que le manchon 8 ne soit déplacé. Cet engagement par train de billes a ainsi l'avantage de supprimer pratiquement les ébats, en évitant cependant la présence de moyens spéciaux, tels que des ressorts, qui augmentent la friction entre l'organe entraîneur et l'organe entraîné.

La denture de la roue 12 engrène avec un pignon 13 calé sur l'arbre 14 d'un moteur pas à pas 15. La commande de ce moteur, bien connue des hommes du métier, n'est pas représentée. Le moteur 15 tourne notamment d'un pas à chaque impulsion qu'il reçoit d'un générateur d'impulsions, et cela, dans un sens ou dans l'autre, selon la polarité des impulsions.

Le générateur d'impulsions est commandé par un ordinateur dont la mémoire peut être chargée, par exemple au moyen d'une bande perforée, sur laquelle figurent toutes les indications relatives aux opérations à effectuer pour usiner une pièce déterminée. Le générateur d'impulsions peut aussi être associé à un ordinateur agencé de façon que sa mémoire puisse être chargée directement de toutes les indications voulues, à l'aide d'un clavier à commande manuelle.

Ainsi, à chaque pas du moteur 15, la roue 12 tourne dans un sens ou dans l'autre d'une fraction de tour bien déterminée et le manchon 8 est déplacé vers l'avant ou vers l'arrière de la même fraction du pas de son filetage. Bien qu'il n'y ait qu'un seul organe (la roue 12) entre le moteur 15 et le manchon 8, l'agencement décrit produit une forte démultiplication de l'un à l'autre, c'est-à-dire un très petit déplacement axial du manchon 8 à chaque pas du moteur 15. Ce manchon peut ainsi être déplacé pratiquement de n'importe quelle quantité et cela quasiment sans à-coups. Par ailleurs, le petit nombre d'organes mécaniques se trouvant entre ce manchon et son moteur a l'avantage de réduire aussi bien la dissipation d'énergie que le facteur d'imprécision.

Une broche rotative 16 a son extrémité antérieure pivotée dans le manchon 8. Elle présente, à cette extrémité, une collerette 17 et porte, de l'autre côté du manchon 8, un écrou 18 bloqué par un contre-écrou 19. Le manchon 8 est ainsi emprisonné axialement entre la collerette 17 et l'écrou 18, qui le solidarisent axialement à la broche 16, toutefois sans le bloquer, afin que la broche 16 puisse tourner librement mais sans jeu axial dans le manchon 8.

L'extrémité postérieure de la broche 16 est pivotée dans la lunette 2 par l'intermédiaire de roulements à billes 20. Comme la poupée 1, la lunette 2 présente une creusure transversale 21 pour la poulie d'entraînement 22. Cette dernière est solidarisée en rotation à la broche 16 par une clavette 23, qui est engagée dans une rainure longitudinale 24 de la broche 16, pour lui permettre de se déplacer axialement par rapport à la poulie 22.

Cette poulie 22 est entraînée en rotation par un moteur à courant continu 25, au moyen d'un renvoi 26 et d'une courroie 27. Le moteur 25 est aussi soumis de façon connue au dispositif électronique de commande numérique, qui le fait tourner à chaque instant à la vitesse qui convient à l'opération d'usinage en cours.

En ce qui concerne l'usinage, la broche 16 fonctionne comme les poupées mobiles des tours conventionnels. Elle tient fermement une barre de matière, qu'elle entraîne en rotation. Pendant l'usinage d'une pièce à l'extrémité antérieure de cette barre, elle fait avancer progressivement cette dernière dans le champ des outils. Lorsque l'usinage d'une pièce est terminé et que celle-ci est tronçonnée de la barre, la broche 16 lâche cette barre, qu'elle laisse appuyée contre le burin à tronçonner, en reculant pour ressaisir la barre en vue de l'usinage d'une nouvelle pièce à son extrémité.

Pour effectuer ces opérations, la broche 16 contient une pince (non représentée) à son extrémité antérieure, dont la fermeture et l'ouverture sont commandées à l'aide d'un dispositif 28, par l'intermédiaire d'un manchon de serrage 29, qui s'étend tout le long de la broche 16.

Comme dans les tours automatiques à poupée mobile conventionnels, l'extrémité antérieure de la barre de matière entraînée par la broche 16 est soutenue par un canon de guidage 30, qui est monté dans le support 3, venu de fabrication avec une saillie tubulaire 3a, et qui la tient fermement dans le champ des outils.

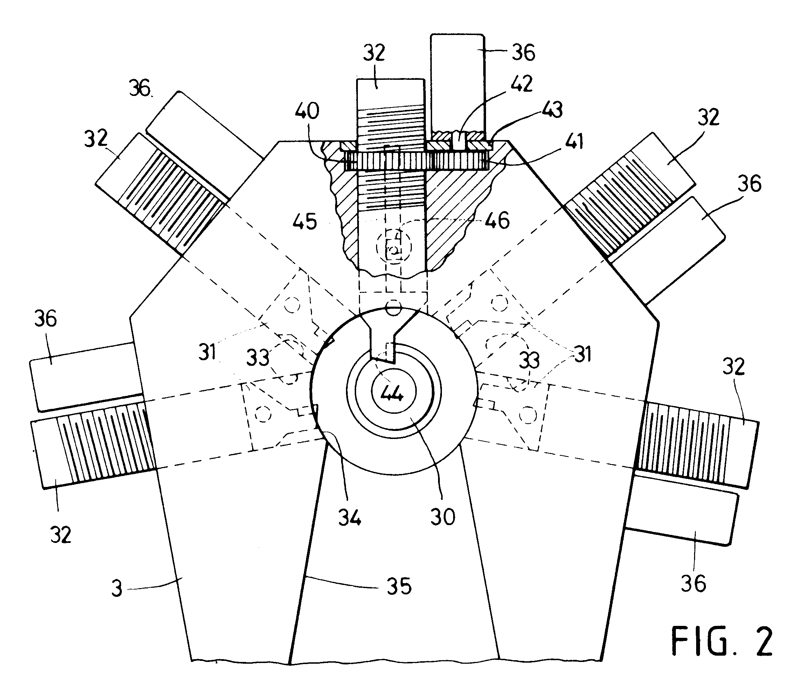

Pour effectuer le décolletage des pièces à cette extrémité de la barre entraînée par la broche 16, le tour selon l'invention comprend un éventail d'outils 31 (Fig. 2). Chacun de ces outils est fixé d'une façon décrite ci-après à un coulisseau cylindrique 32, qui est ajusté dans un alésage 33 du support 3, de façon à pouvoir se déplacer librement, mais sans jeu, dans cet alésage. Les axes des alésages 33 sont situés dans un même plan, qui est perpendiculaire à l'axe de la broche 16, donc de la barre de matière entraînée par cette broche; ils sont disposés selon des rayons partant de cet axe. Chaque outil 31 peut ainsi être déplacé avec son coulisseau 32 dans l'alésage 33 correspondant, le long de ces rayons, entre une position de repos et sa position de travail. Au repos, chaque outil 31 sera juste assez éloigné de la pièce en travail pour libérer l'accès à la pièce des autres outils.

La Fig. 2, dans laquelle seul l'outil central avance en position de travail, montre que l'espace situé à l'avant du canon 30 est dégagé, lorsque les outils 31 sont au repos, cela grâce à une creusure circulaire 34 du support 3, formée coaxialement au canon 30. Un passage 35 est en outre aménagé dans ce support 3, pour permettre l'évacuation des pièces terminées et des copeaux.

Pour actionner les outils 31, un moteur pas à pas 36 est associé à chacun d'eux. Deux variantes d'actionnement sont représentées au dessin. Dans la première (Fig. 1), une tige filetée 37 est fixée au coulisseau 32, coaxialement à ce dernier, et un manchon taraudé 38, solidaire de l'arbre du moteur 36, est engagé sur cette tige 37. Une rotation du rotor du moteur 36 produit ainsi un déplacement du coulisseau 32 et de l'outil 31 le long de l'axe de l'alésage 33. Dans cette variante, les moteurs 36 sont évidemment fixés au support 3 coaxialement aux coulisseaux 32, cette fixation étant réalisée à l'aide de manchons 39.

Dans la seconde variante, représentée à la Fig. 2, la partie postérieure des coulisseaux 32 est filetée, comme le manchon 8 de la poupée 1, et une roue dentée 40, semblable à la roue 12 de la poupée, est en prise avec ce filetage. La denture de cette roue 40 engrène avec un renvoi 41, qui est solidaire de l'arbre 42 du moteur 36. Ce dernier est fixé à une plaquette 43, elle-même fixée dans un logement du support 3, de façon à emprisonner la roue 40 en l'empêchant de se déplacer axialement, mais en lui permettant de tourner librement. Dans cette variante, les moteurs 36 sont donc fixés au bâti 3 parallèlement au coulisseau correspondant.

Comme le moteur 15, actionnant la broche 16 de la poupée 1, les moteurs 36 sont reliés de façon non représentée au même générateur d'impulsions, qui commande ainsi les déplacements des outils 31 comme ceux de la broche 16. Il est bien clair que cette commande pourra procéder par un mouvement d'approche rapide pour amener les outils 31 de leur position de repos vers la pièce, puis par un mouvement lent, déterminé par l'épaisseur du copeau qu'on veut enlever, si l'outil en question travaille par fonçage. Le retrait de l'outil pourra à nouveau s'effectuer en un mouvement rapide.

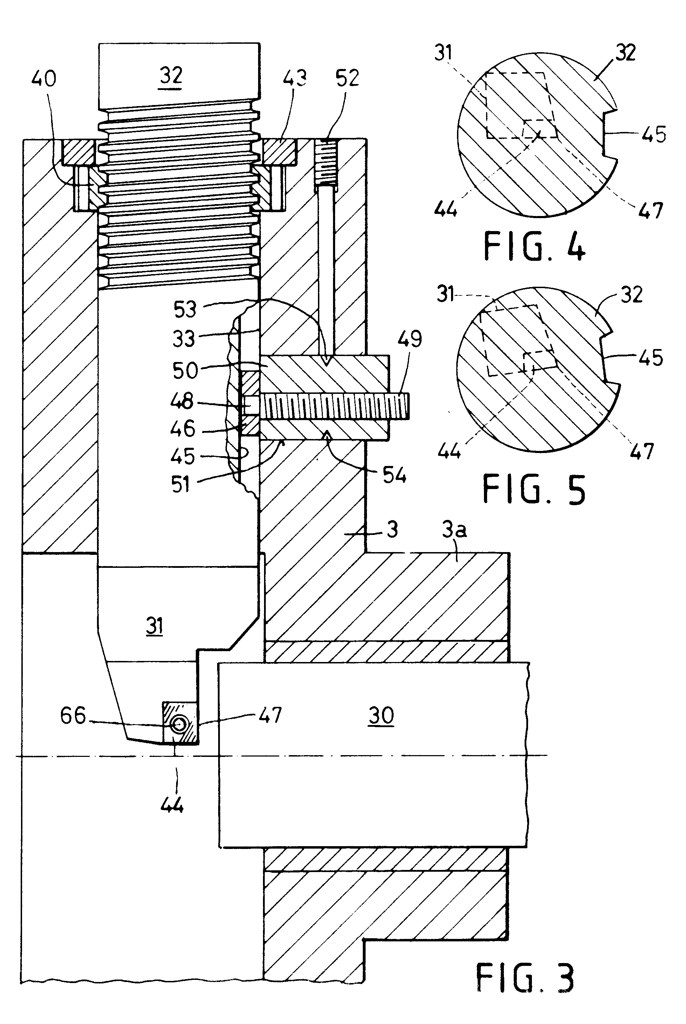

La Fig. 3 montre certains détails de montage des coulisseaux 32 dans le bâti 3. Pour permettre le centrage de l'arête de coupe 47 de l'outil 31, qui se trouve sur une plaquette interchangeable en métal dur 44, fixée à l'extrémité de cet outil 31; une rainure longitudinale 45 est formée dans la face latérale du coulisseau 32. Un sabot 46 est engagé dans cette rainure (voir aussi Fig. 2). Un téton 48, formé à l'extrémité d'une vis 49, est engagé librement dans un trou du sabot 46. La vis 49 est, de son côté, engagée dans un taraudage excentré d'un manchon cylindrique 50 pouvant tourner librement dans une forure 51 du support 3. En faisant ainsi tourner le manchon 50 dans la forure 51, le téton 48 (et avec lui le sabot 46) se déplace selon un cercle de rayon égal à l'excentricité du taraudage du manchon 50. Le déplacement du sabot 46 provoque, à son tour, un petit mouvement de rotation du coulisseau 32 autour de son axe, comme le montrent les Fig. 4 et 5, qui représentent deux positions de réglage différentes du coulisseau 32, sous l'action du manchon 50, de la vis 49 et du sabot 46. Comme l'arête de coupe 47 de l'outil 31 n'est pas dans l'axe du coulisseau 32, il s'ensuit que cette arête peut être déplacée quelque peu en direction transversale à l'aide du manchon 50, et être donc amenée exactement dans l'axe de la pièce en travail.

Selon la position angulaire dans laquelle le coulisseau 32 est finalement amené, il conviendra d'engager plus ou moins la vis 49 dans le taraudage du manchon 50, afin de bien faire plaquer le sabot 46 au fond de la rainure 45 et de maintenir ainsi le coulisseau 32 fermement dans la position réglée. Le manchon 50 est bloqué dans cette position à l'aide d'une vis 52, qui est engagée dans une forure du support 3, parallèle à l'alésage 33, et dont la pointe conique 53 pénètre dans une rainure en V 54 du manchon 50.

Dans cette Fig 3, on voit encore que la roue dentée 40 saisit le filetage du coulisseau 32 par un filetage interne. Il est cependant évident que cet engagement pourrait aussi être assuré comme dans le cas du manchon 8 et de la roue 12, à l'aide de billes. Dans ce dernier cas, la gorge hélicoïdale creusée dans la paroi externe du coulisseau 32 aurait de préférence une section semicirculaire.

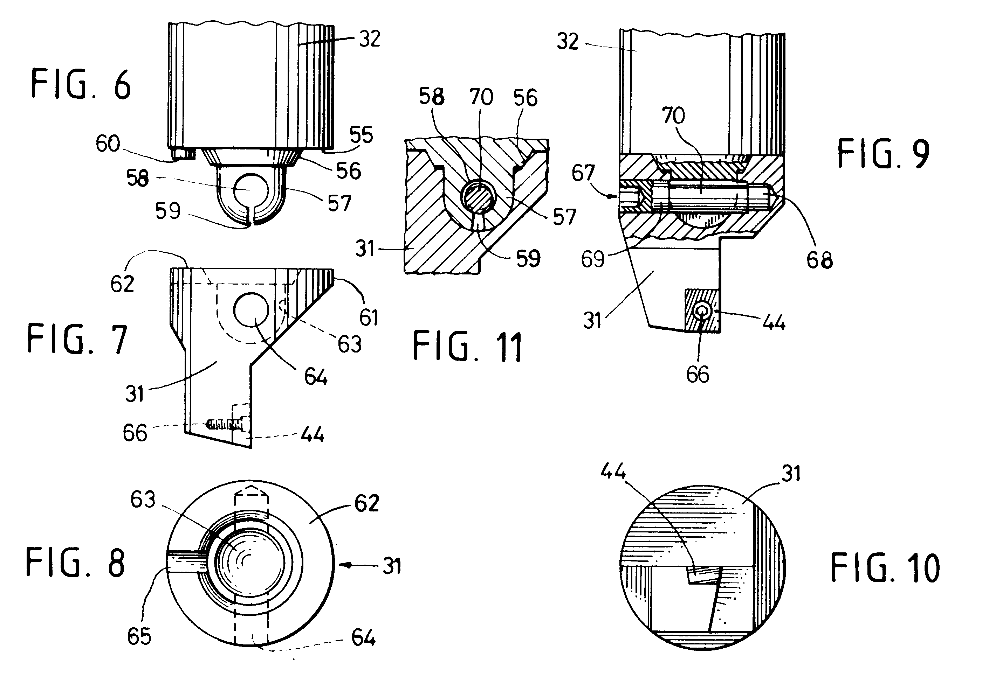

Les Fig. 6 à 11 représentent les détails de l'outil 31 et de sa fixation au coulisseau 32.

Comme on le voit à la Fig. 6, l'extrémité du coulisseau 32 est constituée par une face plane 55, au centre de laquelle un téton fait saillie. Ce téton central présente une collerette tronconique 56 et une tête généralement cylindrique 57. Cette dernière est percée - en 58 - et fendue - en 59 - transversalement, selon un même plan diamétral, de sorte que le trou 58 et la fente 59 divisent la tête 57 en deux parties qui peuvent être légèrement déplacées radialement par déformation élastique. Un plot 60 fait encore saillie de la face plane 55 du coulisseau 32.

Les Fig. 7 et 8 montrent que l'outil 31 présente une embase cylindrique 61, qui, par elle-même, lui confère déjà une grande rigidité. La face extrême 62 de cette embase est plane. Elle présente en son centre un logement 63, qui s'emboîte sur la tête 57 et se plaque sur la collerette 56, quand la face plane 62 est elle-même plaquée sur la face plane 55 du coulisseau 32. L'outil 31 présente encore une forure transversale 64. Afin d'assurer l'orientation de l'outil 31 sur son coulisseau, cet outil présente enfin une encoche 65 dans sa face plane 62, qui est destinée à coopérer avec le plot 60 en qualité d'organe de positionnement, la forure 64 et le trou 58 de la tête 57 se trouvant alignés du même coup lors du montage. L'interchangeabilité de la plaquette en métal dur est assurée par la vis 66.

Le verrouillage de l'outil 31 au coulisseau 32 est effectué au moyen d'un goujon 67 (Fig. 9). Celui-ci présente deux portées cylindriques coaxiales 68 et 69 à ses extrémités et une partie centrale 70, également cylindrique, mais excentrée par rapport aux portées 68, 69. Lorsque le goujon 67 est en place, ses portées 67, 68 se trouvent dans les deux parties de diamètres différents de la forure 64 et sa partie centrale 70, dans le trou 58 de la tête 57 du coulisseau 32.

En faisant alors tourner les goujon 67 autour de son axe, sa partie centrale 70 produit un double effet : premièrement, elle plaque les faces planes 55, 62 l'une sur l'autre, de même que les faces tronconiques du logement 63 et de la collerette 56; deuxièmement, elle écarte légèrement l'une de l'autre les deux parties de la tête 57 (Fig. 11), ce qui a pour effet de plaquer fortement ces deux parties contre la paroi cylindrique du logement 63, en créant une fixation extrêmement rigide de l'outil 31 au coulisseau 32.

La Fig. 10 est une vue en bout de l'outil 31, qui en fait ressortir la configuration.

Bien que tous les outils 31 aient été représentés sous forme de burins, il est évident que d'autres outils pourraient être fixés aux coulisseaux 32, comme dans les tours automatiques conventionnels à poupée mobile.

A l'instar de ces derniers, le tour selon l'invention permet aussi d'usiner la face antérieure des pièces à l'aide d'outils 71, tels que des mèches, des forets, des tarauds, des filières, etc., portés par des broches 72 d'une tourelle revolver 73, montée dans le bâti 4.

Il résulte de la description précédente que le montage et la commande des outils 31, constituant l'objet de la présente invention, sont aussi simples qu'originaux. Ces outils sont extrêmement rigides et pratiquement exempts de vibrations.

Les possibilités de réglage mécanique de la position de travail des outils, nécessaires dans les tours conventionnels, en raison de l'affûtage des outils ou du remplacement des plaquettes en métal dur, qui modifie la position de leurs arêtes de coupe par rapport à la pièce, et du fait que les cames ne peuvent pas être modifiées, sont superflues dans le tour selon l'invention.

Si, après un affûtage ou le remplacement d'une plaquette 44, la nouvelle arête de coupe n'est plus dans la même position que l'ancienne le long de l'axe du tour, il suffit de corriger la cote indiquée à l'ordinateur pour déterminer la position axiale de la broche 16 au moment où l'outil en question va entrer en action. Si c'est en revanche la distance de la nouvelle arête de coupe à l'axe de la pièce qui est modifiée par un affûtage ou le changement d'une plaquette 44, on corrige alors les cotes indiquées à l'ordinateur pour déterminer la position de travail de l'outil. Seul le centrage de l'arête de coupe de ce dernier est encore effectué mécaniquement à l'aide du manchon 50.

## Revendications

1. Tour automatique à commande numérique, comprenant :
   - une broche (16) destinée à entraîner une barre de matière en rotation et mobile axialement pour déplacer dans cette direction l'extrémité de la dite barre dans le champs des outils (21) au cours de l'usinage d'une pièce à l'extrémité de cette barre,
   - un éventail d'outils disposés au moins approximativement dans un même plan perpendiculaire à l'axe de la broche, selon des rayons partant de cet axe, et monté de façon à pouvoir être déplacés dans le sens de ces rayons, entre une position de repos et des positions d'usinage,
   - et des moyens de commande de ces outils comportant pour chacun de ces outils un moteur (36) susceptible de recevoir des impulsions de commande émises en fonction de données fournies à un ordinateur
   caractérisé
   - en ce que les dits outils (31) sont fixés à des coulisseaux cylindriques (32) guidés par des alésages (33) pratiqués dans un seul support (3) fixé au banc (6) du tour,
   - en ce que chacun desdits moteurs actionne un coulisseau par l'intermédiaire d'une liaison cinématique directe et à double effet (37,38;40,41);
   et en ce que le dit support (3) des outils (31) porte un canon de guidage (30) soutenant la barre de matière au voisinage immédiat des outils (31).

2. Tour automatique selon la revendication 1 caractérisé
   - en ce que la face latérale de chaque coulisseau (32) présente une rainure longitudinale (45) dans laquelle est engagé un sabot (46), qui est monté sur un pivot (48) formé à l'extrémité d'une vis (49) perpendiculaire au coulisseau (32),
   - et en ce que cette vis (49) est elle même engagée dans un taraudage excentré d'un manchon cylindrique (50), capable de tourner dans une forure (51) du dit support (3) des outils (31).

3. Tour automatique selon la revendication 2 caractérisé en ce que le support des outils porte une vis de blocage (52) dudit manchon (50), qui est parallèle au coulisseau (32) correspondant.

4. Tour automatique selon l'une des revendications précédentes, caractérisé
   - en ce qu'à son extrémité antérieure, chaque coulisseau (32) présente une face plane (55), au centre de laquelle fait saillie un téton comprenant une collerette tronconique (56) percée et fendue transversalement dans le même plan diamétral, de façon à former deux parties susceptibles d'être légèrement écartées élastiquement l'une de l'autre,

- en ce que chaque outil (31) présente une embase cylindrique (61) à face extrême (62) plane, présentant en son centre un logement (63) qui s'emboîte sur la tête cylindrique (57) et se plaque sur la collerette tronconique (56) du dit téton central du coulisseau (32), quand les faces planes (55,62) de ce dernier et de l'embase (61) de l'outil (31) sont elles-mêmes plaquées l'une contre l'autre,
- et en ce qu'un goujon (67) présentant des portées cylindriques (68,69), coaxiales, à des extrémités et une partie centrale excentrée (70), est engagé dans une forure transversale (64) de l'embase de l'outil (31) et passe à travers le trou (58) de la tête du téton, en écartant quelque peu les deux parties de celle-ci, de façon à les plaquer contre la paroi correspondante du logement central (63) de l'outil (31) et à verrouiller rigidement ce dernier à l'extrémité antérieure du coulisseau (32).

5. Tour automatique selon la revendication 4 caractérisé en ce que les faces planes extrêmes (55,62) de l'embase (61) de l'outil (31) et du coulisseau (32) portent des organes de repérage (60,65) destinés à ne permettre la mise en place de l'outil (31) sur le téton central du coulisseau (32) que dans une orientation bien déterminée.

**Claims**

1. Numerically controlled automatic lathe comprising :
   - a spindle (16) intended to drive a rod of stock in rotation and axially movable to displace in that direction the end of said bar in the field of the tools (21) during the machining of a piece at the end of said bar,
   - a fan of tools located at least approximately in a same plan perpendicular to the axis of the spindle, along radii emanating from said axis and mounted in a way to be displaceable along said radii between a rest position and a machining position,
   - and control means for said tools comprising for each tool a motor (36) which can receive control pulses emitted in function of datas delivered to a computer

caracterized
   - in that the said tools (31) are fixed to cylindrical slides (32) guided by bores (33) provided in only one support (3) fastened to the lathe bed (6),
   - in that each of said motors actuates a slide through a direct and double action cinematic linkage (37, 38, 40, 41);
   - and in that the said support (3) of the tools (31) carries a guiding sleeve (30) supporting the bar of stock in the immediate vicinity of the tools (31).

2. Automatic lathe according to claim 1 caracterized
   - in that the lateral face of each slide (32) comprises a longitudinal slot (45) in which a shoe (46) is engaged, which is mounted on a pivot (48) formed at the end of a screw (49) perpendicular to the slide (32),
   - in that this screw (49) is itself engaged in an excentered thread of a cylindrical sleeves (50) able to rotate in a bore (51) of said support (3) for the tools (31).

3. Automatic lathe according to claim 2 caracterized in that the support of the tools carries a locking screw (52) of the said sleeve (50) which is parallel to the corresponding slide (32).

4. Automatic lathe according to one of the preceeding claims caracterized by the fact
   - in that at its fore end each slide (32) has a plane face (55), at the center of which merges a pin having a frustoconical collar (56) bored and split transversally in the same diametral plan, so as to form two parts able to be slightly spread apart resiliently one from the other,
   - in that each tool (31) present a cylindrical bore (61) having an outside plane face (62) presenting in its center a housing (63) engaging the cylindrical head (57) and resting on the frustoconical collar (56) of said central pin of the slide (32) when the plane faces (55, 62) of the latter and of the bore (61) of the tool (31) are applied one against the other,
   - and in that a stud (67) having coaxial cylindrical shoulders (68, 69) at its end and a central excentered part (70), is engaged in a transversal bore (64) of the tool (31) and passes through the hole (58) of the head of the stud, spreading apart slightly its two parts, so as to apply them against the corresponding wall of the central housing (63) of the tool (31) and to rigidly lock this latter at the fore end of the slide (32).

5. Automatic lathe according to claim 4 caracterized in that the planed end faces (55, 62) of the bore (61) of the tool (31) and of the slide (32) carry marking members (60, 65) intended to permit the setting in place of the tool (31) and the central pin of the slide (32) in only one well determined orientation.

**Patentansprüche**

1. Drehautomat mit numerischer Steuerung,
   mit einer Spindel (16) zum Antreiben einer rotierenden und axial verschiebbaren Material-Stange, um das Ende der Stange während der Bearbeitung eines am Ende der genannten Stange befindlichen Teils in dieser Richtung in das Umfeld der Werkzeuge (21) zu verschieben,
   - mit mehreren fächerförmig angeordneten Werkzeugen, welche mindestens annähernd in einer gemeinsamen und senkrecht zur Achse der Spindel gerichteten Ebene längs von der Achse weggehenden Strahlen angeordnet und so befestigt sind, dass sie in Richtung der Strahlen zwischen einer Ruhestellung und einer Arbeitsstellung verschiebbar sind,
   - und mit Mitteln zum Steuern dieser Werkzeuge, die für jedes der Werkzeuge einen zur Aufnahme von Befehlsimpulsen ausgebildeten Motor (36) aufweisen, welche Befehlsimpulse in Funktion von an einen Computer gelieferten Daten emittiert werden,
   dadurch gekennzeichnet,
   - dass die genannten Werkzeuge (31) an zylindrischen Schlitten (32) befestigt sind, welche durch Gewindeteile (33) geführt werden, die an einem einzigen, an der Bank (6) des Drehautomaten befestigten Träger (3) angeordnet sind,
   - dass jeder der genannten Motoren über eine direkte und doppelt wirkende kinematische Verbindung (37, 38; 40, 41) einen Schlitten antreibt, und
   - dass der genannte Träger (3) für die Werkzeuge (31) eine Führungsbüchse (30) aufweist, welche die Stange in unmittelbarer Nähe der Werkzeuge (31) führt.

2. Drehautomat nach Patentanspruch 1, dadurch gekennzeichnet,
   - dass die seitliche Fläche jedes Schlittens (32) eine Längsnut (45) aufweist, in welche ein Fuss (46) eingreift, welcher an einem Hebel (48) befestigt ist, der an einem Ende einer Schraube (49) senkrecht zum Schlitten (32) angeordnet ist, und
   - dass diese Schraube (49) mit einem exzentrischen Muttergewinde eines zylindrischen, in einer Ausnehmung (51) des Schlittens (32) der Werkzeuge (31) drehbar angeordneten Körpers (50) in Eingriff steht.

3. Drehautomat nach Patentanspruch 2, dadurch gekennzeichnet, dass der Träger für die Werkzeuge eine Feststellschraube(52) für den genannten Körper (51) aufweist, die parallel zum entsprechenden Schlitten (32) gerichtet ist.

4. Drehautomat nach einem der obigen Patentansprüche, dadurch gekennzeichnet,
   - dass jeder Schlitten (32) an seinem vorderen Ende eine ebene Fläche (55) aufweist, aus deren Mitte ein Zapfen herausragt, der ein zulaufendes Halsteil (56) aufweist und der in derselben Diametralebene durchbohrt und gespalten ist, derart, dass zwei elastisch leicht auseinanderspreizbare Teile gebildet werden,
   - dass jedes Werkzeug (31) einen zylindrischen Befestigungsteil (61) mit einer ebenen Aussenfläche (62) aufweist, in deren Mitte eine Aufnahme (63) vorgesehen ist, welche auf den zylindrischen Kopfteil (57) passt und am zulaufenden Halsteil (56) des genannten mittigen Zapfens des Schlittens (32) anliegt, wenn die ebenen Flächen (55, 62) des letzteren und des Befestigungsteils (61) des Werkzeuges (31) aneinander anliegen,
   - und dass ein Bolzen (67) mit zylindrischen Tragflächen (68, 69) an den koaxialen Enden und mit einem exzentrischen Mittelteil (70) in einer Querausnehmung (64) des Befestigungsteils des Werkzeugs (31) angeordnet ist und durch die Bohrung (58) des Kopfteil des Zapfens ragt, wobei er die beiden Teile desselben leicht auseinanderspreizt, um sie gegen die entsprechende Wandung der mittigen Ausnehmung (63) des Werkzeugs (31) zu drücken und das letztere starr am vorderen Endteil des Schlittens (32) zu verriegeln.

5. Drehautomat nach Patentanspruch 4, dadurch gekennzeichnet, dass die ebenen Endflächen (55, 62) des Befestigungsteils (1) des Werkzeugs (31) und des Schlittens (32) Richtorgane (60, 65) aufweisen, um die Anordnung des Werkzeuges (31) auf dem mittigen Ansatz des Schlittens (32) nur in einer genau bestimmten Lage zu ermöglichen.

FIG. 1

FIG. 2

40
32
43
52

53
33
50
48
46
45
51

49

54

31

66
47
30

44

3
3a

31
32
45
44
47

**FIG. 4**

31
32
45
44
47

**FIG. 5**

**FIG. 3**

FIG. 6

FIG. 7

FIG. 8

FIG. 9

FIG. 10

FIG. 11